(19) Europäisches Patentamt
European Patent Office
Office européen des brevets

(11) **EP 4 574 602 A1**

(12) **EUROPEAN PATENT APPLICATION**

(43) Date of publication:
**25.06.2025 Bulletin 2025/26**

(21) Application number: **23217806.1**

(22) Date of filing: **19.12.2023**

(51) International Patent Classification (IPC):
***B60W 30/08*** (2012.01)

(52) Cooperative Patent Classification (CPC):
**B60W 30/09; B60W 30/08;** B60W 2050/143;
B60W 2554/4042; B60W 2554/4043;
B60W 2554/806

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Continental Autonomous Mobility
Germany GmbH
85057 Ingolstadt (DE)**

(72) Inventor: **Soya, Ryuichi
339780 Singapore (SG)**

(74) Representative: **Continental Corporation
c/o Continental Automotive Technologies GmbH
Intellectual Property
Guerickestr. 7
60488 Frankfurt am Main (DE)**

(54) **METHOD AND SYSTEM FOR COLLISION WARNING OF A VEHICLE**

(57)     A method (300) for collision warning of an ego-vehicle (1), wherein method (300) comprises the following steps: determine (S1) a speed of an ego-vehicle (1), determine (S2) a warning zone (3) of an ego-vehicle (1), wherein the warning zone is preferably provided at a lateral side of the ego-vehicle, determine (S3) a movable target (5) located at least partially within the warning zone (3) of the ego-vehicle (1), determine (S4) a heading angle (7) between an ego-vehicle travel direction (15) and a movable target travel direction (17), predict (S5) a crossing point (9) of the movable target (5) and the ego-vehicle (1), determine (S6) a lateral time to collision, TTC, of the movable target (5) and the ego-vehicle (1), wherein a lateral direction (L) is a direction orthogonal to a travel direction (T) of the ego-vehicle (1), and provide (S7) a collision warning if the following conditions are met: a determined vehicle speed is higher than a vehicle speed threshold value, a determined heading angle (7) is within a heading angle threshold value range, a predicted crossing point (9) hits the ego-vehicle (1), and a determined lateral TTC is less than a lateral TTC threshold value.

Fig. 3

EP 4 574 602 A1

**Description**

TECHNICAL FIELD

The present invention relates to a collision warning method and system in an ego-vehicle. The present invention also relates to a driving system, a vehicle, a computer program product and a computer readable medium concerning a respective collision warning method and system.

BACKGROUND

Collision warning is a crucial element of driver assistance systems and/or autonomous driving systems and many functions of said driver assistance systems and/or autonomous driving systems depend on the results of the collision warning system.

Potentially dangerous situations may arise when an ego-vehicle travels along a lane and a moving target is located in and approaches from a blind spot of the driver of the ego-vehicle. A particular problem with known collision warning systems is that no collision warning may be provided when the ego-vehicle maintains its direction of travel but the moving target in the blind spot attempts to cross the travel path of the ego-vehicle.

Thus, a need exists for an improved collision warning method and system.

SUMMARY

It is therefore an object of the present invention to provide a collision warning method that overcomes at least partially the above-mentioned problems. Also, it is an object of the present invention to provide a collision warning system, a driving system, a vehicle, a computer program product and a computer readable medium relating to the improved collision warning according to the present invention.

The object of the present invention is solved by the subject matter of the independent claims, wherein further embodiments are incorporated in the dependent claims.

The present invention relates to a method for collision warning of an ego-vehicle. The method comprises the step to determine a speed of an ego-vehicle.

The method further comprises the step to determine a warning zone of an ego-vehicle, wherein the warning zone is preferably provided at a lateral side of the ego-vehicle.

The method further comprises the step to determine a movable target located at least partially within the warning zone of the ego-vehicle.

The method further comprises the step to determine a heading angle between an ego-vehicle travel direction and a movable target travel direction.

The method further comprises the step to predict a crossing point of the movable target and the ego-vehicle.

The method further comprises the step to determine a lateral time to collision, TTC, of the movable target and the ego-vehicle, wherein a lateral direction is a direction orthogonal to a travel direction of the ego-vehicle.

The method further comprises the step to provide a collision warning if the following conditions are met:

a determined vehicle speed is higher than a vehicle speed threshold value,
a determined heading angle is within a heading angle threshold value range,
a predicted crossing point hits the ego-vehicle, and
a determined lateral TTC is less than a lateral TTC threshold value.

Thus, an improved collision warning method is provided, which overcomes the drawbacks of known collision warnings, in particular, regarding movable targets located in blind spots and approaching the ego-vehicle.

An ego-vehicle may be any vehicle employing the collision warning according to the present invention. The term "ego" as such thus does not imply any technical limitation but may be understood as merely distinguishing the vehicle according to the present invention from further environmental targets, e.g. vehicles.

The ego-vehicle may be provided with respective means for determination or detection of the above noted parameters used to carry out and/or control the collision warning method according to the present invention. For instance, the ego-vehicle may comprise one or more detectors and/or sensors and respective control means configured to determine the above noted parameters, e.g. to determine or detect the speed, the warning zone, the heading angle and to determine if the movable target is at least partially within the warning zone.

Furthermore, the ego-vehicle may comprise respective computational means, e.g. a computer, for predicting a crossing point and the determination of a lateral TTC. Furthermore, the ego-vehicle may comprise corresponding computational means for determining, if the above noted conditions for providing the collision warning are met and accordingly provide the collision warning. The one or more sensors or detectors, which may be arranged at any suitable position at the ego-vehicle, may acquire respective data, e.g., radar data and/or images, and may provide said data to the computer of the driving system for a further determination.

The warning zone may be provided at a lateral side of the ego vehicle. If a point of the movable target is determined being in the warning zone, then the movable target may be accordingly determined being in a Side Collision Indication System (SCIS) zone for which potential side collisions of the movable target with the ego-vehicle may be accordingly indicated. However, it will be understood that also a plurality of warning zones may be provided at any side around the ego-vehicle, which also may be sized and shaped as desired. The warning zone may be, for instance, predefined having an extension in a lateral direction away from the ego-vehicle at a distance up to 2.5 m. Furthermore, the warning zone may have an extension orthogonal to the lateral direction, i.e. the travel direction, which may correspond to the extension direction of the ego-vehicle, up to 2 m from the front end and/or the rear end of the ego-vehicle.

The warning zone may be defined by control means and by respective minimum and maximum parameters in the x-direction, which may be the direction orthogonal to the lateral direction and which may be defined as "ZoneXMin" and "ZoneXMax", respectively. Herein "ZoneXMin" may define a distance from the ego-vehicle rear side to the rear side of the warning zone and may be set, for instance, to "-1 m". Likewise "ZoneXMax" may define a distance from the ego-vehicle rear side to the front side of the warning zone and may be set, for instance, to "ego-vehicle length+1 m".

Likewise the warning zone may be defined by pre-set minimum and maximum parameters in the y-direction, which may be the lateral direction and which may be defined as "ZoneYMin" and "ZoneYMax", respectively. Herein "ZoneYMin" may define a distance from the ego-vehicle's side edge to the near side of the warning zone and may be set, for instance, to "-0.5 m". Likewise "ZoneYMax" may define a distance from the ego-vehicle's side edge to the far side of the warning zone and may be set, for instance, to "2 m". Further, the warning zone may comprise pre-set minimum and maximum parameters for a hysteresis in the x- and y-direction of the warning zone, which may be designated as "ZoneXHys" and "ZoneYHys" and which may be set to, for instance, 0.5 m.

The movable target may be any environmental element, e.g. another car. The movable target may be a moving target or a non-moving target. The method according to the present invention may determine if at least a part of the movable target is located in or enters into the warning zone of the ego-vehicle.

The crossing point may be a point, wherein the ego-vehicle and the movable target cross in the future, e.g. a first contact point of car bodies of the ego-vehicle and another vehicle crossing the path of the ego-vehicle. The determination of the crossing point may be based on a constant movement of the ego-vehicle and the movable target and/or may be based on a prediction regarding potential changes in the movement of the ego-vehicle and/or the movable target.

Also more than one movable target may be detected and the method of the present invention may accordingly allow a collision warning for each of the plurality of movable targets.

The lateral TTC may be a determined time range or time instance that indicate when the ego-vehicle and a movable target approaching the ego-vehicle in the lateral direction may collide.

A collision warning may be provided by suitable means for informing the driver about the potential collision. This may be implemented via respective optical, acoustical, haptic or further means suitable for making aware the driver about the potential collision risk.

It is noted that the order of any method steps described in this specification can also be changed and some of the above described method steps may also be omitted or further method steps may be added, as desired.

In a preferred embodiment of the method of present invention, the lateral TTC is a lateral TTC considering an acceleration, and a collision warning is provided if a determined lateral TTC considering acceleration is less than a lateral TTC threshold value.

In a preferred embodiment of the method of present invention, the lateral TTC is a lateral TTC without considering an acceleration, and a collision warning is provided if a determined lateral TTC without considering acceleration is less than a lateral TTC threshold value.

Thus, a sophisticated prediction regarding a potential collision with or without considering the acceleration of the movable target could be provided. A lateral TTC threshold value may be preset or predefined or may be adjusted dynamically on further parameters of the ego-vehicle. The TTC threshold value may have pre-set parameters for different warning levels, e.g. a low-level warning and a high-level warning, which may be defined as "TTCThresh[Lv0]" and "TTCThresh[Lv1]", respectively, and may be, for instance, set each to 0.5 s.

A collision warning may be provided if one or more of the following conditions are met:

1. The lateral TTC considering acceleration is less than threshold value,
2. The lateral TTC without considering acceleration is less than threshold value,
3. The lateral TTC without considering acceleration is less than threshold value or the lateral TTC considering acceleration is less than threshold value,
4. The lateral TTC without considering acceleration is less than threshold value and the lateral TTC considering acceleration is less than threshold value.

The Lateral TTC considering acceleration and Lateral TTC without considering acceleration may have the same or different threshold values.

In a preferred embodiment of the method of present invention, when the lateral TTC is a lateral TTC considering an acceleration, the method further comprises the steps to determine a relative lateral velocity "$V_y$" of the movable target, to determine a relative lateral acceleration "$A_y$" of the movable target, to determine a reference point of the movable target, which is a closest point of the movable target with respect to the ego-vehicle, to determine a lateral distance "$d_y$" between the closest point of the movable target and the lateral side of the ego-vehicle, and wherein the lateral TTC considering acceleration is determined as:

$$Lateral\ TTC = \{\ -V_y \pm \sqrt{(V_y^2 - 2 * A_y * d_y)}\ \} / A_y.$$

In a preferred embodiment of the method of present invention, when the lateral TTC is a lateral TTC without considering an acceleration, the method further comprises the steps to determine a relative lateral velocity "$V_y$" of the movable target, to determine a reference point of the movable target, which is a closest point of the movable target with respect to the ego-vehicle, to determine a lateral distance "$d_y$" between the closest point of the movable target and the lateral side of the ego-vehicle, and wherein the lateral TTC without considering acceleration is determined as:

$$Lateral\ TTC = d_y/(-V_y).$$

Thus, a robust and reliable method for determining an approaching movable target may be provided, even if the movable target approaches in a blind spot of the ego-vehicle. Hence, an improved collision warning could be provided.

Generally, the indices, e.g. X and Y, noted in present disclosure with respect to any variables and determined parameters usually refer to the corresponding direction, e.g. with respect to the x- and y-direction. Thus, a lateral distance "$d_y$" may refer to a distance in a y-direction and so forth.

In a preferred embodiment of the method of present invention, the travel direction of the ego-vehicle is an x-direction and the lateral direction is a y-direction, and the method further comprises the steps to determine an x-position vector "$D_{xi}$", to determine a relative x-velocity "$V_x$" of the movable target, to determine a y-position vector "$D_{yi}$", to determine a y-velocity "$V_y$" of the movable target, and to predict a first x-position crossing point "ColPosXPred", which is an x-position of a movable target's collision point when the movable target collides with the ego-vehicle's side, as:

$$ColPosXPred = D_{xi} + V_x * \left(\frac{D_{yi}}{-V_y}\right)$$

Thus, a reliable prediction regarding the collision point of the movable target with the ego-vehicle can be provided, even if the target approaches from a blind spot of the ego-vehicle. Respective control and/or warning means of the ego-vehicle may be accordingly adapted such that a collision could be potentially prevented or the consequences of the collision could be mitigated. "$D_{xi}$" may an x-vector indicating a distance in the x-direction between the first x-position crossing point and a reference point of the movable vehicle. "$D_{yi}$" may be a y-vector indicating a distance in the y-direction between the first x-position crossing point and the reference point. "$V_x$" and "$V_y$" may be accordingly respective velocities in the x- and y-direction.

For the control of the collision warning, the first x-position crossing point may be defined by pre-set minimum and maximum threshold values. A minimum threshold value may be defined as "ColPoXPredMin" and may be set, for instance, to "((-1)*ego-vehicle's length) m". Likewise, a maximum threshold value may be defined as "ColPoXPredMax" and may be set, for instance, to "1 m". Further, a hysteresis value may be defined as "ColPoXPredHys" and may be set, for instance, to 0.5 m.

In a preferred embodiment of the method of present invention, the travel direction of the ego-vehicle is an x-direction and the lateral direction is a y-direction, and the method further comprises the steps to determine an x-position vector "$D_{xi}$", to determine a rotated y-position vector "$D_{yit}$" considering the heading angle, to determine a rotated x-velocity vector "$V_{relXt}$" considering the heading angle, to determine a rotated y-velocity vector "$V_{relYt}$" considering the heading angle, and to predict a second x-position crossing point "ColPosXPred2", which is an x-position of an ego-vehicle's collision point when the ego-vehicle collides with the movable target's side, as:

$$ColPoXPred2 = D_{xi} + V_{relXt} * \left(\frac{D_{yit}}{-V_{relYt}}\right).$$

Thus, a reliable prediction regarding the collision point of the movable target with the ego-vehicle can be provided, even if the ego-vehicle approaches from a blind spot of the movable target. Respective control and/or warning means of the ego-vehicle can be accordingly adapted such that a collision may be potentially prevented or the consequences of the collision may be mitigated.

In a preferred embodiment of the method of present invention, the method further comprises the step to provide a low-level collision warning to a driver of the ego-vehicle if a heading angle is determined to be in a range of between 0 degree and 60 degree.

A low-level warning may be, for instance the provision of optical, acoustical or haptic etc. information for the driver regarding the potential collision. A driver may accordingly have sufficient time to react on the collision warning. For the control of the low-level, which may also be referred to as "level 0" warning, the heading angle may be defined by pre-set minimum and maximum parameters "HeadingMin[0]" and "HeadingMax[0]". Accordingly, "HeadingMin[0]" may define a minimum target heading angle to enable the function for "level 0" and may be set to "0 degree". Likewise, "HeadingMax[0]" may define a maximum target heading angle to enable the function for "level 0" and may be set to "60 degree".

In the context of the present invention, an angle of 0 degree may be an angle which defines a direction parallel to the travel direction of the ego-vehicle. Accordingly, an angle of 180 degree may be an angle, which defines a direction opposite to the travel direction of the ego-vehicle. Thus, a movable target, which travels with a heading angle of 0 degree travels essentially in the same direction as the ego-vehicle and a movable target, which travels with a heading angle of 180 degree frontally approaches the ego-vehicle.

In a preferred embodiment of the method of present invention, the method further comprises the step to provide a high-level collision warning to a driver of the ego-vehicle if a heading angle is determined to be in a range of between 60 degree and 180 degree.

A high-level warning may include, for instance in addition or alternatively to the optical, acoustical or haptic etc. information, an automatic emergency-control of the ego-vehicle, which may include the activation of passive or active safety systems of the ego-vehicle. Thus, high-level warnings may prevent collisions at undesirably large heading angles. Such collisions may be generally more dangerous compared collisions at smaller heading angles because the movable target may approach the ego-vehicle with a higher relative velocity, i.e. a driver may accordingly not be able to timely react on the collision warning.

For the control of the high-level warning, which may also be designated as "level 1 warning", the heading angle may be defined by pre-set minimum and maximum parameters "HeadingMin[1]" and "HeadingMax[1]", respectively. Accordingly, "HeadingMin[1]" may define a minimum target heading angle to enable the function for "level 1" and may be set to "60 degree". Likewise, "HeadingMax[1]" may define a maximum target heading angle to enable the function for "level 1" and may be set to "180 degree".

In a preferred embodiment of the method of present invention, the high-level warning comprises an activation of passive safety systems of the ego-vehicle.

Passive safety systems may be, for instance, airbags, seatbelts, and others safety features. In a further embodiment, the high-level warning alternatively or in addition comprises an activation of active safety systems of the ego-vehicle. This may include, for instance Antilock Braking System, an assisted brake and/or an assisted steering. Thus, an upcoming collision may be prevented or, in case a collision occurs, the ego-vehicle's driver may be suitably protected.

The present invention also relates to a collision warning system of an ego-vehicle comprising at least one detector and a computer, wherein the collision warning system is configured to be operated according to any of the methods of the present invention.

The method may comprise that a minimum speed of the ego-vehicle may be required to enable the collision warning system, which may be also referred to as a SCIS. The minimum speed may have a pre-set minimum parameter, e.g. defined as "VsMin", which may be, for instance, set to 5.5 m/s. Further embodiments may include that the movable target's absolute speed must exceed a certain threshold to enable the safety function, e.g. defined as "VtgtMin", which may be, for instance, set to 1 m/s. Further, the SCIS may be enabled under the condition that the forward gear is engaged. For each detected movable target, it may be furthermore checked if previous warnings have been enabled. In case no previous warnings were enabled, the presence of the following conditions may be checked for an activation or enablement of the warning: a valid heading angle of the movable target, a valid lateral TTC (with or without acceleration), a predicted collision point of the movable target and the ego vehicle and a determination that the movable target is in the warning zone. In case a previous warning was already enabled, the presence of the following conditions may be checked for continuing the warning: a valid lateral TTC (with or without acceleration) considering hysteresis, a predicted collision point of the movable target and the ego vehicle considering hysteresis, and if the movable target is in the warning zone considering hysteresis. Dependent on the above noted conditions, a low-level warning or a high-level warning may be issued.

The present invention also relates to a driving system comprising a collision warning system according to the present invention and an ego-vehicle control and information means, wherein the collision warning system is adapted to allow at least partially a control of the ego-vehicle via the ego-vehicle control and information means.

The ego-vehicle control and information means may allow to (at least semi-) automatically influence the control of the ego-vehicle. This may include an assisted driving, for instance an acceleration, braking and/or steering to avoid or mitigate a potential collision. Further, the ego-vehicle control information means may comprise suitable information devices to inform a driver of the ego-vehicle regarding an upcoming collision, such as optical, acoustical and or haptic means like screens and speakers, etc.

In a preferred embodiment of the driving system of present invention, the driving system is a driver assistance system and/or an autonomous driving system.

In either case, the collision warning of the driving system is improved by the methods and systems for collision warning as described herein.

The present invention also relates to a vehicle, comprising a collision warning system according to the present invention or a driving system according to the present invention.

In the context of this application, the vehicle may be, for instance, a road vehicle, in particular a car, a bus, a truck or a motorbike. Hence, the advantages and further embodiments correspond to those given in the above description.

The present invention also relates to a computer program product comprising computer-readable instructions which, when executed by a computer, cause the computer to carry out and/or control any of the methods according to the present invention.

The features of the system and the method according to the present invention may be implemented by respective suitable digital or computational means, which can include, for instance, one or more computers, apps and/or networks.

The method may be at least partly computer-implemented, and may be implemented in software or in hardware, or in software and hardware. Further, the method may be carried out by computer program instructions running on data processing means that provide data processing functions.

The data processing means may be a suitable computing means, such as an electronic control module etc., which may also be a distributed computer system. The data processing means or the computer, respectively, may comprise one or more of a processor, a memory, a data interface, or the like.

The present invention also relates to a computer readable medium having stored thereon computer-readable instructions which, when executed by a computer, cause the computer to carry out and/or control any of the methods according to the present invention.

A computer program (product) may be stored/distributed on a suitable medium such as an optical storage medium or a solid-state medium, supplied together with or as part of other hardware, but may also be distributed in other forms, such as via the Internet or other wired or wireless telecommunication systems.

The features and advantages outlined above in the context of the system and the method similarly apply to the computer program product and the computer-readable medium described herein. Likewise, any features and advantages noted with regard to the method of the present invention apply accordingly to the system of the present invention and vice versa.

Further features, examples, and advantages will become apparent from the following detailed description of preferred embodiments and the accompanying figures.

BRIEF DESCRIPTION OF THE DRAWINGS

For a better understanding of the present invention, and to illustrate its practicality, figures are provided in the following and reference is made thereto. It should be understood that the figures represent only exemplary embodiments and thus in no way limit the scope of the claimed invention. Identical or like-acting elements are indicated throughout by the same reference signs. Any reference signs in the claims should not be construed as limiting the scope of the claims.

In the accompanying drawings:

Fig. 1 is a flowchart schematically illustrating a method for collision warning of an ego-vehicle according to the present invention;

Fig. 2 is a flowchart schematically illustrating a method for collision warning of an ego-vehicle according to the present invention;

Fig. 3 illustrates in a schematic, not to scale view a working principle of a method for collision warning of an ego-vehicle according to the present invention;

Fig. 4 illustrates in a schematic, not to scale view a working principle of a method for collision warning of an ego-vehicle according to the present invention;

Fig. 5 illustrates in a schematic, not to scale view a working principle of a method for collision warning of an ego-vehicle according to the present invention;

Fig. 6 illustrates in a schematic, not to scale view an ego-vehicle comprising a driving system and a collision warning system according to the present invention.

DESCRIPTION OF EMBODIMENTS

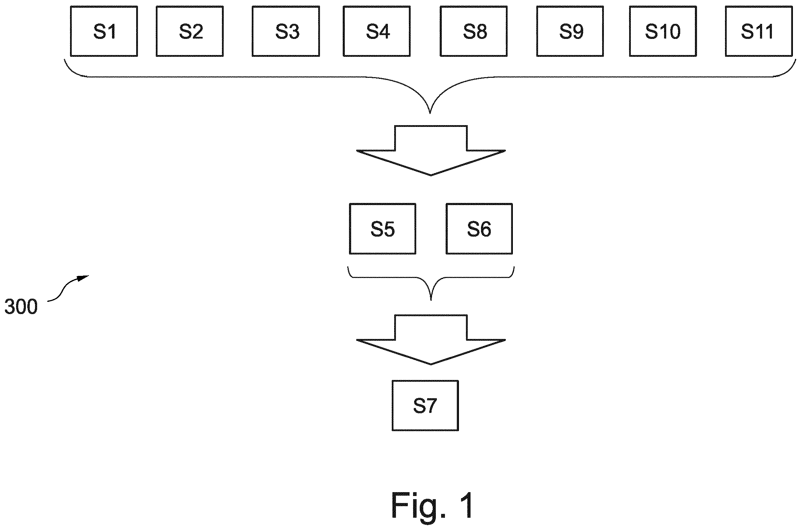

Figure 1 shows a method 300 for collision warning of an ego-vehicle 1. The method 300 comprises a step S1, wherein a speed of an ego-vehicle 1 is determined, a step S2, wherein a warning zone 3 of an ego-vehicle 1 is determined, a step S3, wherein a movable target 5 located at least partially within the warning zone 3 of the ego-vehicle 1 is determined, a step S4, wherein a heading angle 7 between an ego-vehicle travel direction 15 and a movable target travel direction 17 is determined. From the resulting data, a crossing point 9 of the movable target 5 and the ego-vehicle 1 can be predicted in a step S5 and a lateral time to collision, TTC, of the movable target 5 and the ego-vehicle 1, wherein a lateral direction L is a direction orthogonal to a travel direction T of the ego-vehicle 1, can be determined in a step S6. Further, method 300 comprises a step S7 wherein a collision warning is provided if the following conditions are met: a determined vehicle speed is higher than a vehicle speed threshold value, a determined heading angle 7 is within a heading angle threshold value range, a predicted crossing point 9 hits the ego-vehicle 1, and a determined lateral TTC is less than a lateral TTC threshold value.

Further, the method 300 comprises a step S8, wherein a relative lateral velocity "$V_y$" of the movable target 5 is determined, a step S9, wherein a relative lateral acceleration "$A_y$" of the movable target 5 is determined, a step S10, wherein a reference point of the movable target 5, which is a closest point of the movable target 5 with respect to the ego-vehicle 1, and a step S11, wherein a lateral distance "$d_y$" between the closest point of the movable target 5 and a lateral side of the ego-vehicle 1 is determined. From this data the lateral TTC considering acceleration can be determined as:

$$\textbf{\textit{Lateral TTC}} = \{ -V_y \pm \sqrt{(V_y{}^2 - 2 * A_y * d_y)} \} / A_y.$$

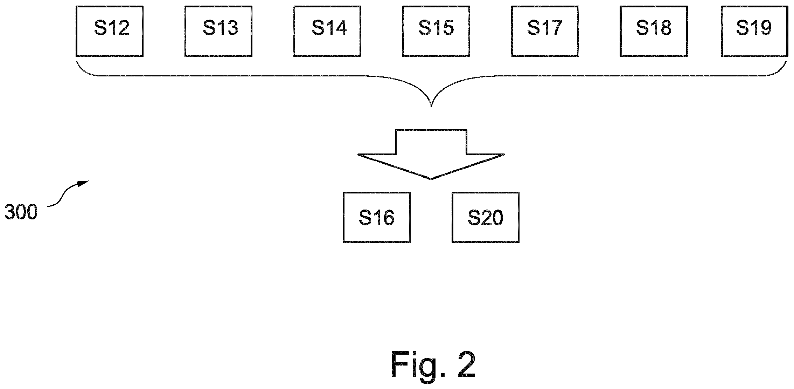

Figure 2 shows a method 300 for collision warning of an ego-vehicle 1. The method 300 comprises a step S12, wherein an x-position vector "$D_{xi}$" is determined, a step S13, wherein a relative x-velocity "$V_x$" of a movable target 5 is determined, a step S14, wherein a y-position vector "$D_{yi}$" is determined, and a step S15, wherein a y-velocity "$V_y$" of the movable target 5 is determined. From this resulting data, a first x-position crossing point "ColPosXPred", which is an x-position of a movable target's collision point when the movable target 5 collides with the ego-vehicle's side, can be predicted in a step S16 as:

$$ColPosXPred = D_{xi} + V_x * \left(\frac{D_{yi}}{-V_y}\right).$$

Further, the method 300 comprises a step S17, wherein a rotated y-position vector "$D_{yit}$" considering the heading angle 7 can be determined, a step S18, wherein a rotated x-velocity vector "$V_{relXt}$" considering the heading angle 7 of the movable target 5 can be determined, and a step S19, wherein a rotated y-velocity vector "$V_{relYt}$" considering the heading angle 7 of the movable target 5 can be determined. From this data, a second x-position crossing point "ColPosXPred2", which is an x-position of an ego-vehicle's collision point when the ego-vehicle 1 collides with the movable target's side, can be predicted in a step S20 as:

$$ColPoXPred2 = D_{xi} + V_{relXt} * \left(\frac{D_{yit}}{-V_{relYt}}\right).$$

It is noted that in further embodiments, any of the method steps described above may also be omitted or further method steps may be added and/or the order of the steps may be changed, as desired. For instance, the above noted steps S16 and S20 may be provided both or individually in the method according to the present invention and the corresponding preceding method steps for data determination may be accordingly provided or omitted.

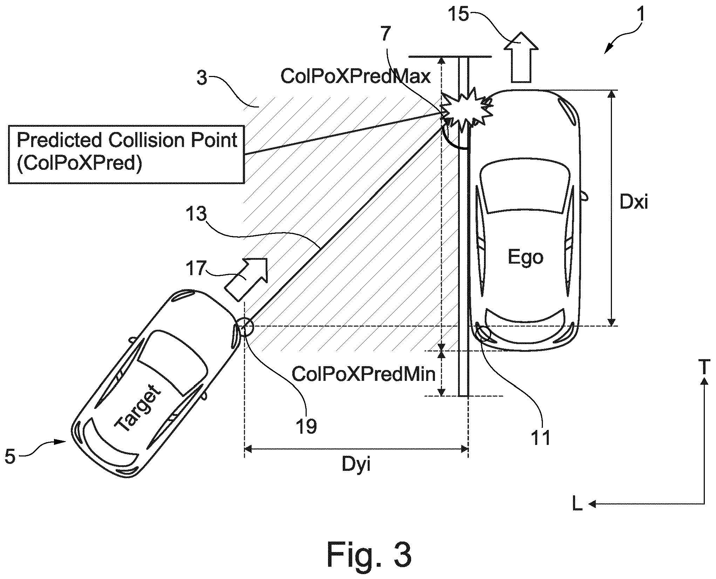

Figure 3 shows a schematic view of a working principle of a method for collision warning of an ego-vehicle according to the present invention. Herein, an ego-vehicle 1 travels along an ego-vehicle travel direction 15. A movable target 5, e.g. another vehicle, approaches the ego-vehicle 1 along a movable target travel direction 17, which crosses the way of the ego-vehicle 1 and thus potentially crashes into the side of the ego-vehicle 1 in a blind spot of the ego-vehicle 1. The ego-vehicle 1 determines a warning zone 3 at its lateral side. A detector 11 provided at the ego-vehicle 1 detects that the movable target 5 enters the warning zone 3. The collision warning system 50 of the ego-vehicle 1 determines that the movable target 5 has entered the warning zone 3 and determines a reference point 19 of the movable target 5, which is the closest point of the movable target 5 with respect to the ego-vehicle 1. Further, the speed of the ego-vehicle 1 is determined. Further, a heading angle 7 between an ego-vehicle travel direction 15 and the movable target travel direction 17 is determined. A crossing point of the ego-vehicle 1 and the movable target 5 is determined. A lateral TTC of the movable target 5 and the ego-vehicle 1, wherein a lateral direction L is a direction orthogonal to a travel direction T of the ego-vehicle 1, is determined. The reference point 19 moves along a predicted travel path 13. A collision warning is provided, for instance to a driver, if the following conditions are met: a determined vehicle speed is higher than a vehicle speed threshold value, a determined heading angle 7 is within a heading angle threshold value range, a predicted crossing point 9 hits the ego-vehicle 1, and a determined lateral TTC is less than a lateral TTC threshold value. Fig. 3 illustrates a first x-position crossing point "ColPosXPred", which is an x-position of a movable target's collision point at the side of the ego-vehicle 1, when the movable target 5 collides with the ego-vehicle's side. Further, Fig. 3 illustrates a distance "ColPoXPredMin", which is a minimum threshold value of the predicted crossing point X at which the movable target 5 collides with the ego-vehicle 1. Further, Fig. 3 illustrates a distance "ColPoXPredMax", which is a maximum threshold value of the predicted crossing point X at which the movable target 5 collides with the ego-vehicle 1. Further, Fig. 3 illustrates an x-position vector "$D_{xi}$", which is determined and which is an x-vector indicating a distance in the x-direction between the first x-position crossing point and the reference point 19. Further, Fig. 3 illustrates a y-position vector "$D_{yi}$", which is determined and which is a y-vector indicating a distance in the y-direction between the first x-position crossing point and the reference point 19.

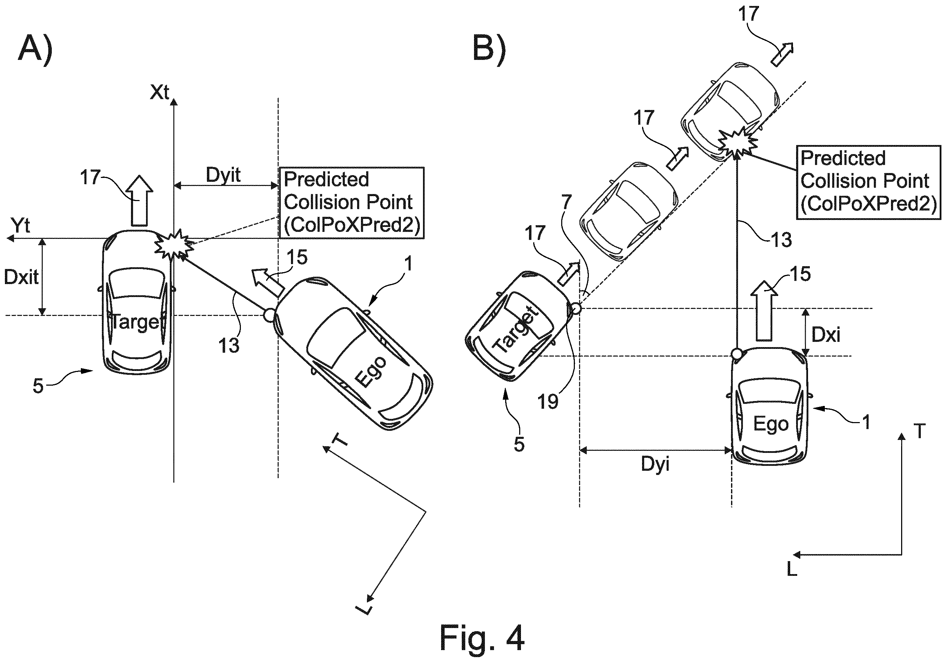

Fig. 4 similarly illustrates schematically the working principle of a method for collision warning of an ego-vehicle according to the present invention. Same elements shown and explained with respect to figure 3 are accordingly the same in figure 4 and are not reiterated for the sake of brevity. In figure 4, different to figure 3, the ego-vehicle 1 potentially crashes into the side of the movable target 5 in a blind spot of the movable target 5. In subfigure 4A, this situation is illustrated in a reference system "Xt" and "Yt", which is based on a reference coordinate system "X" and "Y" further considering the heading angle 7. Accordingly, in subfigure 4B, the same situation is shown in the reference coordinate system "X" and "Y", wherein "X" corresponds to the ego-vehicle travel direction 15 and "Y", which may be referred to a lateral direction, is orthogonal to "X". The movable target 5 is depicted at different positions during its movement. Accordingly an x-position vector "$D_{xi}$" is determined, which is an x-vector indicating a distance in the x-direction between the first x-position crossing point and a reference point 19 of the movable vehicle 5. A rotated y-position vector "$D_{yit}$" is determined based on the y-position vector "$D_{yi}$" and further considering the heading angle 7. A rotated x-velocity vector "$V_{relXt}$" is determined based on the relative x-velocity of the movable target 5 and considering the heading angle 7. A rotated y-velocity vector "$V_{relYt}$" is determined based on the relative y-velocity of the movable target 5 and considering the heading angle 7. Accordingly, a second x-position crossing point "ColPosXPred2", which is an x-position of an ego-vehicle's collision point when the ego-vehicle 1 collides with the movable target's side, can be predicted. Also a rotated x-position vector "$D_{xit}$" is illustrated, which is based on the x-position vector "$D_{xi}$" and further considering the heading angle 7.

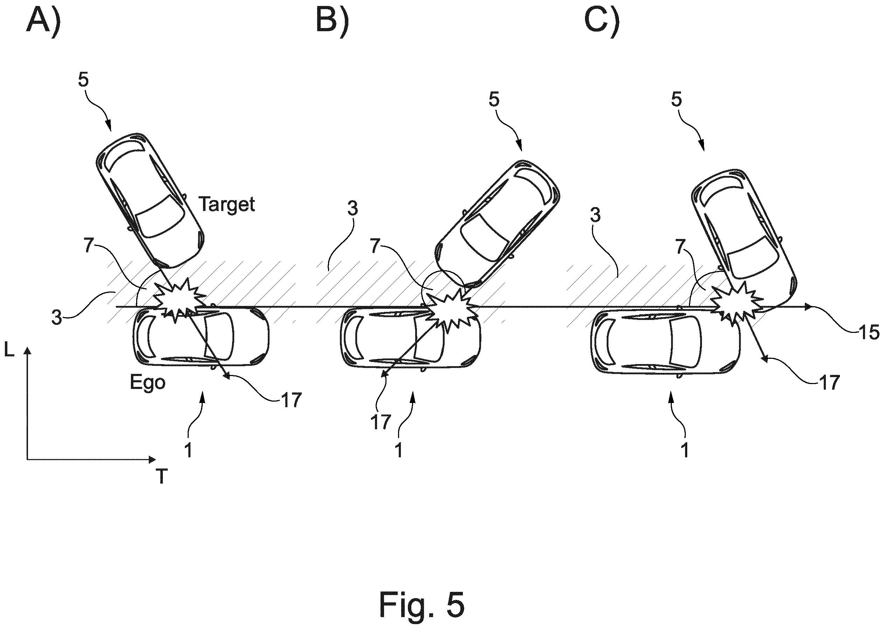

Fig. 5 similarly illustrates schematically the working principle of a method for collision warning of an ego-vehicle according to the present invention. Same elements shown and explained with respect to figures 3 and 4 are accordingly the same in figure 5 and are not reiterated for the sake of brevity. Figure 5 schematically shows the movable target 5 approaching in different heading angles 7 towards the ego-vehicle 1. Herein, the heading angle 7 of the movable target 5 in sub-figure Fig 5B is larger than the heading angles 7 of sub-figures Fig 5A and 5B. Furthermore, different x-position crossing points of the ego vehicle at which a collision occurs, are depicted.

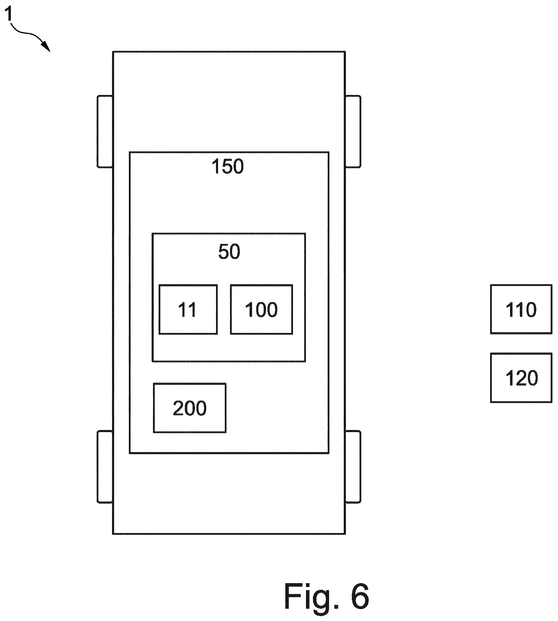

Fig. 6 illustrates in a schematic view an ego-vehicle 1 comprising a driving system 150 and a collision warning system 50 according to the present invention. The driving system 150 comprises the collision warning system 50 and an ego-vehicle control an information means 200. The collision warning system 50 comprises a detector 11 and a computer 100. The computer may also be provided separate to the collision warning system 50. The collision warning system 50 is configured to be operated according to one of the methods for collision warning of an ego-vehicle 1, as described herein, for instance the method 300 described with respect to figures 1 to 5. Further, a computer program product 110 and a computer readable medium 120 are illustrated. The computer program product 110 comprises computer-readable instructions which, when executed by the computer 100, cause the computer 100 to carry out and/or control any of the methods for collision warning of an ego-vehicle 1, as described herein, for instance the method 300 described with respect to figures 1 to 5. The computer readable medium 120 has stored thereon computer-readable instructions which, when executed by the computer 100, cause the computer 100 to carry out and/or control any of the methods for collision warning of an ego-vehicle 1, as described herein, for instance the method 300 described with respect to figures 1 to 5.

LIST OF REFERENCE SIGNS

S1    ego-vehicle speed determination
S2    warning zone determination
S3    movable target determination
S4    heading angle determination
S5    crossing point prediction
S6    Lateral time to collision determination

S7    collision warning provision
S8    relative lateral velocity determination
S9    relative lateral acceleration determination
S10   reference point determination
S11   lateral distance determination
S12   x-position vector determination
S13   relative x-velocity determination
S14   y-position vector determination
S15   y-velocity determination
S16   first x-position crossing point prediction
S17   rotated y-position vector determination
S18   rotated x-velocity vector determination
S19   rotated y-velocity vector determination
S20   second x-position crossing point prediction

1    ego-vehicle
3    warning zone
5    movable target
7    heading angle
9    crossing point
11   detector
13   predicted travel path
15   ego-vehicle travel direction
17   movable target travel direction
19   reference point
50   Collision warning system
100  Computer
110  Computer program product
120  Computer readable medium
150  driving system
200  ego-vehicle control and information means
300  collision warning method

**Claims**

1. A method (300) for collision warning of an ego-vehicle (1), wherein method (300) comprises the following steps:

   determine (S1) a speed of an ego-vehicle (1),
   determine (S2) a warning zone (3) of an ego-vehicle (1), wherein the warning zone is preferably provided at a lateral side of the ego-vehicle,
   determine (S3) a movable target (5) located at least partially within the warning zone (3) of the ego-vehicle (1),
   determine (S4) a heading angle (7) between an ego-vehicle travel direction (15) and a movable target travel direction (17),
   predict (S5) a crossing point (9) of the movable target (5) and the ego-vehicle (1),
   determine (S6) a lateral time to collision, TTC, of the movable target (5) and the ego-vehicle (1), wherein a lateral direction (L) is a direction orthogonal to a travel direction (T) of the ego-vehicle (1), and
   provide (S7) a collision warning if the following conditions are met:

   a determined vehicle speed is higher than a vehicle speed threshold value,
   a determined heading angle (7) is within a heading angle threshold value range,
   a predicted crossing point (9) hits the ego-vehicle (1), and
   a determined lateral TTC is less than a lateral TTC threshold value.

2. The method (300) according to the preceding claim,

   wherein the lateral TTC is a lateral TTC considering an acceleration, and
   wherein a collision warning is provided if a determined lateral TTC considering acceleration is less than a lateral TTC threshold value.

3. The method (300) according to the preceding claim, further comprising the steps:

> determine (S8) a relative lateral velocity "$V_y$" of the movable target (5),
> determine (S9) a relative lateral acceleration "$A_y$" of the movable target (5),
> determine (S10) a reference point of the movable target (5), which is a closest point of the movable target (5) with respect to the ego-vehicle (1),
> determine (S11) a lateral distance "$d_y$" between the closest point of the movable target (5) and the lateral side of the ego-vehicle (1),
> wherein the lateral TTC considering acceleration is determined as:

$$\textit{Lateral TTC} = \{ \, -V_y \pm \sqrt{(V_y{}^2 - 2 * A_y * d_y)} \, \} \, / \, A_y.$$

4. The method (300) according to claim 1,
   wherein the lateral TTC is a lateral TTC without considering an acceleration, and wherein a collision warning is provided if a determined lateral TTC without considering acceleration is less than a lateral TTC threshold value.

5. The method (300) according to the preceding claim, further comprising the steps:

> determine (S8) a relative lateral velocity "$V_y$" of the movable target (5),
> determine (S10) a reference point of the movable target (5), which is a closest point of the movable target (5) with respect to the ego-vehicle (1),
> determine (S11) a lateral distance "$d_y$" between the closest point of the movable target (5) and the lateral side of the ego-vehicle (1),
> wherein the lateral TTC without considering acceleration is determined as:

$$\textit{Lateral TTC} = d_y/(-V_y).$$

6. The method (300) according to one of the preceding claims, wherein the travel direction (T) of the ego-vehicle (1) is an x-direction and the lateral direction (L) is a y-direction, the method (300) further comprising the steps:

> determine (S12) an x-position vector "$D_{xi}$",
> determine (S13) a relative x-velocity "$V_x$" of the movable target (5),
> determine (S14) a y-position vector "$D_{yi}$",
> determine (S15) a y-velocity "$V_y$" of the movable target (5),
> predict (S16) a first x-position crossing point "ColPosXPred", which is an x-position of a movable target's collision point when the movable target (5) collides with the ego-vehicle's side, as:

$$\mathbf{ColPosXPred} = \mathbf{D}_{xi} + \mathbf{V}_x * \left( \frac{\mathbf{D}_{yi}}{-\mathbf{V}_y} \right).$$

7. The method (300) according to one of the preceding claims, wherein the travel direction (T) of the ego-vehicle (1) is an x-direction and the lateral direction (L) is a y-direction, the method (300) further comprising the steps:

> determine (S12) an x-position vector "$D_{xi}$",
> determine (S17) a rotated y-position vector "$D_{yit}$" considering the heading angle (7),
> determine (S18) a rotated y-velocity vector "$V_{relXt}$" considering the heading angle (7),
> determine (S19) a rotated y-velocity vector "$V_{relYt}$" considering the heading angle (7),
> predict (S20) a second x-position crossing point "ColPosXPred2", which is an x-position of an ego-vehicle's collision point when the ego-vehicle (1) collides with the movable target's side, as:

$$\mathbf{ColPoXPred2} = \mathbf{D}_{xi} + \mathbf{V}_{relXt} * \left( \frac{\mathbf{D}_{yit}}{-\mathbf{V}_{relYt}} \right).$$

8. The method (300) according to one of the preceding claims, further comprising the step:
   provide a low-level collision warning to a driver of the ego-vehicle (1) if a heading angle (7) is determined to be in a range of between 0 degree and 60 degree.

9. The method (300) according to one of the preceding claims, further comprising the steps:
   provide a high-level collision warning to a driver of the ego-vehicle (1) if a heading angle (7) is determined to be in a range of between 60 degree and 180 degree.

10. The method (300) according to the preceding claim,
    wherein the high-level warning comprises an activation of passive safety systems of the ego-vehicle (1).

11. A collision warning system (50) of an ego-vehicle (1) comprising at least one detector (11) and a computer (100), wherein the collision warning system (50) is configured to be operated according to the method (300) according to any one of claims 1 to 10.

12. A driving system (150) comprising a collision warning system (50) according to claim 11 and an ego-vehicle control and information means (200), wherein the collision warning system (50) is adapted to allow at least partially a control of the ego-vehicle (1) via the ego-vehicle control and information means (200).

13. The driving system according to claim 12, wherein the driving system is a driver assistance system and/or an autonomous driving system.

14. Vehicle (1), comprising a collision warning system (50) according to claim 11 or a driving system (150) according to claim 12 or 13.

15. A computer program product (110) comprising computer-readable instructions which, when executed by a computer (100), cause the computer (100) to carry out and/or control the method (300) of any of claims 1 to 10.

16. A computer readable medium (120) having stored thereon computer-readable instructions which, when executed by a computer (100), cause the computer to carry out and/or control the method (300) of any of claims 1 to 10.

Fig. 1

300

| S12 | S13 | S14 | S15 | S17 | S18 | S19 |

| S16 | S20 |

# Fig. 2

**Fig. 3**

EP 4 574 602 A1

A)

$X_t$

17

$D_{yit}$

Predicted
Collision Point
(ColPoXPred2)

$Y_t$

$D_{xit}$

15

1

Target

13

Ego

5

T

L

B)

17

17

17

Predicted
Collision Point
(ColPoXPred2)

7

13

17

15

$D_{xi}$

Target

19

Ego

1

5

$D_{yi}$

T

L

Fig. 4

EP 4 574 602 A1

A)    B)    C)

Fig. 5

EP 4 574 602 A1

Fig. 6

Europäisches
Patentamt

European
Patent Office

Office européen
des brevets

## EUROPEAN SEARCH REPORT

**Application Number**

EP 23 21 7806

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 132859 A1 (HYUNDAI MOTOR CO LTD [KR]; KIA CORP [KR]) 13 July 2023 (2023-07-13) | 1,4-9, 11-16 | INV. B60W30/08 |
| Y | * paragraphs [0008], [0043], [0045], | 2,3 | |
| A | [0074] - [0103]; figure 5 * | 10 | |
| Y | EP 4 063 214 A1 (CHINA FAW CO LTD [CN]) 28 September 2022 (2022-09-28) * paragraph [0071] * | 2,3 | |
| A | EP 4 265 497 A1 (CONTINENTAL AUTONOMOUS MOBILITY GERMANY GMBH [DE]) 25 October 2023 (2023-10-25) * the whole document * | 1-10 | |

**TECHNICAL FIELDS SEARCHED (IPC)**

B60W

The present search report has been drawn up for all claims

| Place of search | Date of completion of the search | Examiner |
|---|---|---|
| Munich | 2 May 2024 | Stolle, Martin |

EPO FORM 1503 03.82 (P04C01)

## ANNEX TO THE EUROPEAN SEARCH REPORT
## ON EUROPEAN PATENT APPLICATION NO.

**EP 23 21 7806**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-05-2024**

| Patent document cited in search report | Publication date | Patent family member(s) | | Publication date |
|---|---|---|---|---|
| DE 102022132859 A1 | 13-07-2023 | CN | 116424313 A | 14-07-2023 |
| | | DE | 102022132859 A1 | 13-07-2023 |
| | | KR | 20230108595 A | 18-07-2023 |
| | | US | 2023219565 A1 | 13-07-2023 |
| EP 4063214 A1 | 28-09-2022 | CN | 111717199 A | 29-09-2020 |
| | | EP | 4063214 A1 | 28-09-2022 |
| | | WO | 2021259257 A1 | 30-12-2021 |
| EP 4265497 A1 | 25-10-2023 | CN | 116923418 A | 24-10-2023 |
| | | EP | 4265497 A1 | 25-10-2023 |
| | | GB | 2617864 A | 25-10-2023 |
| | | US | 2023343217 A1 | 26-10-2023 |

EPO FORM P0459

For more details about this annex : see Official Journal of the European Patent Office, No. 12/82